# FASCICULE DE BREVET EUROPEEN

(11) **EP 0 885 774 B1**
(45) Date de publication et mention de la délivrance du brevet: **19.03.2003**
(21) Numéro de dépôt: 98401469.6
(22) Date de dépôt: 16.06.1998
(51) Int. Cl.: B60Q 1/076

(54) **Dispositif correcteur de l'orientation du faisceau lumineux émis par un projecteur de véhicule automobile**
Lichtbündeleinstellungseinrichtung eines Fahrzeugscheinwerfers
Vehicle headlight beam adjustment device

(30) Priorité: 16.06.1997 FR 9707423
(43) Date de publication de la demande: 23.12.1998
(73) Titulaire: VALEO VISION, 93000 Bobigny (FR)
(72) Inventeur: Natchoo, Philippe, 77220 Tournan en Brie (FR)
(74) Mandataire: Le Forestier, Eric

(56) Documents cités:
- DE-A- 2 249 694
- DE-A- 2 339 837
- DE-A- 2 952 217
- DE-U- 7 813 545
- US-A- 6 086 232

## Description

La présente invention a trait d'une façon générale aux dispositifs correcteurs électriques pour régler l'orientation du ou des faisceaux lumineux émis par un projecteur de véhicule automobile.

Elle vise plus particulièrement à un perfectionnement à un correcteur à sortie rotative équipé de moyens de réglage manuel.

Un correcteur à sortie rotative comprend de façon classique un boîtier dans lequel est reçu un moteur électrique qui, associé à une transmission formant réducteur, entraîne en rotation une tige en saillie à partir du boîtier.

Cette tige possède une empreinte mâle ou femelle qui permet de l'accoupler à une tige de commande filetée engagée dans un taraudage fixe, solidaire du boîtier du projecteur, et en prise avec le réflecteur du projecteur. De la sorte, la rotation de la tige de sortie du correcteur fait tourner la tige de commande qui, grâce à son filetage, se déplace en outre en translation pour faire pivoter le réflecteur autour d'un point fixe, et ainsi régler l'orientation du faisceau émis. Il s'agit généralement d'un réglage en site en fonction des variations d'assiette du véhicule, mais l'on peut également envisager un réglage en azimut si on le souhaite.

Un problème rencontré dans ce type de correcteur réside en ce qu'il doit être associé à des moyens additionnels permettant d'effectuer manuellement, généralement en usine, le réglage du réflecteur pour amener les faisceaux dans une position de référence, dite position zéro. C'est donc à partir de cette position "zéro" que le correcteur électrique va agir pour modifier le réglage.

Les moyens de réglage manuel du zéro consistent généralement un un système mécanique extérieur au boîtier du correcteur, qui met en jeu un bouton de réglage accessible de l'extérieur et des moyens tels que biellettes, engrenages ou analogues, qui permettent de faire varier un paramètre géométrique de l'accouplement entre la tige de sortie du correcteur électrique et la tige de commande du réflecteur.

Le document US 6086232 A révèle aussi un dispositif correcteur pour régler l'orientation d'un faisceau émis par un projecteur de véhicule automobile, comprenant un boîtie rabritant un moteur électrique, une tige de sortie rotative et un réducteur opérant entre l'arbre de sortie du moteur électrique et ladite tige de sortie, comprenant en outre un organe de réglage manuel monté rotatif dans le boîtier, un moyen de transmission sélective entre l'organe de régalge manule et la tige de sortie pour amener cette dernière dans une position de réféRence lors de la rtoation dudit organe de réglage, et un mécanisme d'embrayage sélectif prévu au niveau de la tige de sortie, le débrayage exercé par ledit organe de réglage, ce mouvement de débrayage étant différent de son mouvement de réglage.

Ces moyens sont souvent complexes, fastidieux à monter du fait de la nécessité d'un double montage d'un correcteur électrique et d'un correcteur manuel, et grèvent le prix de revient du projecteur.

La présente invention vise à pallier ces inconvénients de l'état de la technique, et à proposer un correcteur électrique associé à des moyens de réglage manuel d'une structure particulièrement simple et économique. Un autre objet de la présente invention est de proposer un dispositif correcteur intégré, abritant dans un même boîtier fermé un correcteur électrique et un correcteur manuel pour le réglage du "zéro".

Ainsi la présente invention propose un dispositif correcteur tel que défini dans la revendication 1.

Des aspects préférés, mais non limitatifs, du dispositif selon l'invention sont définis dans les revendications dépendantes.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est une vue en coupe axiale d'un dispositif correcteur selon l'invention, dans une position de réglage motorisé,
la figure 2 est une vue en coupe axiale du dispositif, dans une position de réglage manuel,

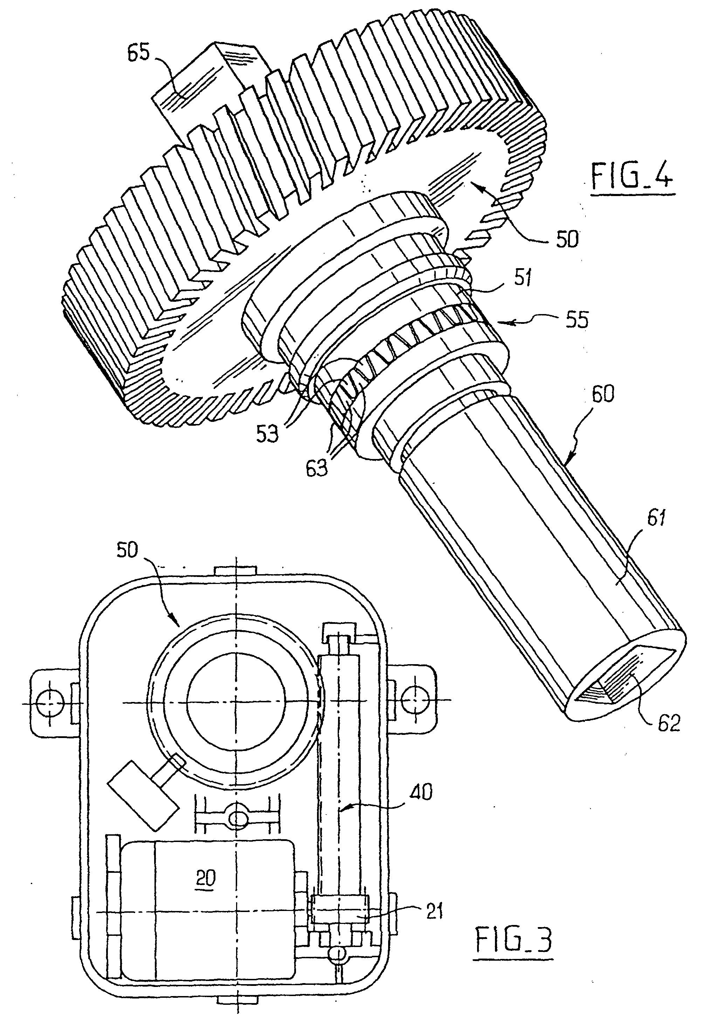

la figure 3 est une vue en coupe transversale du dispositif, selon la ligne III-III de la figure 2,
la figure 4 est une vue en perspective d'une partie du dispositif des figures 1 à 3, et
la figure 5 est une vue en coupe transversale d'un détail du dispositif, selon la ligne V-V de la figure 1.

En référence aux figures, on a représenté un dispositif correcteur motorisé/manuel pour ajuster l'orientation du faisceau d'un projecteur de véhicule automobile.

Le dispositif comprend, de façon classique en soi, un boîtier 10 abritant un moteur électrique 20 et dont une partie 12 forme le corps d'un connecteur 30 destiné à appliquer au moteur les signaux de commande requis. Le dispositif est le cas échéant pourvu d'une boucle d'asservissement de position, sous forme d'un circuit électrique ou électronique prévu sur un circuit imprimé 35.

L'arbre de sortie du moteur 20 porte un pignon 21 qui engrène avec une vis sans fin 40, qui elle-même engrène avec une roue 50 présentant une denture externe 50a, de manière à former un train réducteur.

Une tige de sortie 60 est montée pivotante dans un palier 14 formé au niveau d'une surépaisseur 13 du boîtier 10, de façon concentrique avec la roue dentée 50. A cet effet, la roue dentée 50 est réalisée d'un seul tenant avec un manchon généralement cylindrique 51 entourant étroitement la tige 60 et monté par encliquetage à l'intérieur d'un autre manchon cylindrique 15, formant palier, en saillie à l'intérieur du boîtier 10 à partir de sa région 13.

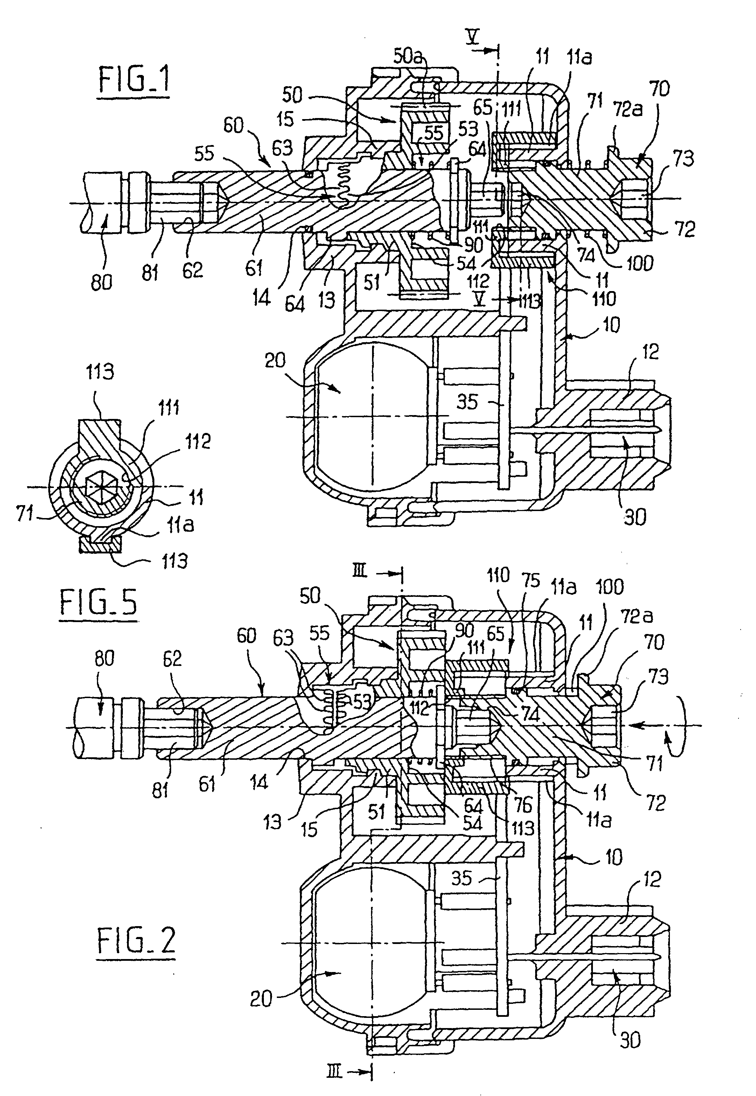

La tige 60 possède une partie 61 qui fait saillie vers l'extérieur et qui se termine à son extrémité libre par une empreinte en creux 62, par exemple à section hexagonale (figures 1 et 2) ou carrée (figure 4), qui est apte à recevoir une tête hexagonale mâle 81 d'une tige de commande d'orientation 80 illustrée partiellement sur les figures 1 et 2.

Cette tige 80, de façon entièrement classique et non illustrée, possède un filetage extérieur coopérant avec un élément taraudé solidaire du boîtier du projecteur, pour se déplacer en translation lorsqu'elle est entraînée en rotation par le dispositif de l'invention, et ainsi faire basculer un réflecteur du projecteur autour d'un point d'appui fixe.

La tige 60 est apte à coulisser selon son axe par rapport à la roue dentée 50, en étant guidée par le manchon 51 de la roue dentée.

Un mécanisme d'embrayage à crabot est prévu entre la roue dentée 50 et la tige de sortie 60.

Ce mécanisme, globalement désigné par la référence 55, comprend une série de dents 53 en saillie, vers la gauche sur les figures 1 et 2, à l'extrémité libre du manchon 51 de la roue dentée, et une série de dents 63 en saillie, vers la droite sur les figures 1 et 2, prévues sur une collerette 64 d'un seul tenant avec la tige de sortie 60.

Ces dents 53, 63 sont aptes à sélectivement s'interpénétrer, comme on le verra en détail plus loin, de manière à solidariser la roue dentée 50 et la tige de sortie 60 en rotation.

Dans ce cas, le dispositif selon l'invention opère comme un correcteur motorisé classique, la rotation du moteur 20 entraînant une rotation correspondante, à vitesse réduite, de la tige de sortie 60.

Comme on l'observe sur les figures 1 et 2, la tige 60, dans sa région d'extrémité intérieure, possède une collerette 64 suivie, vers l'extérieur, d'une tête 65 constituée en l'espèce par une empreinte mâle hexagonale (figures 1 et 2) ou carrée figure 4).

Un ressort de compression hélicoïdal 90 est emprisonné autour de la tige 60 entre la collerette 64 et la paroi de fond 54 d'une cavité 55 prévue dans la région centrale de la roue dentée 50. Ce ressort 90 tend donc, dans une position de repos du dispositif, à maintenir en prise les dents 53, 63 du mécanisme à crabot 55, le débrayage de celui-ci étant décrit plus loin.

Le dispositif correcteur comprend également un bouton de réglage manuel 70 monté pivotant, avec possibilité de coulissement selon son axe dans un palier 11 constitué par un manchon appartenant au boîtier 10 et en saillie vers l'intérieur dudit boîtier, de manière à pouvoir tourner autour du même axe que la roue dentée 50 et la tige de sortie 60.

Le bouton 70 comporte un corps 71 et une tête 72 dans laquelle est formée une empreinte en creux 73, par exemple hexagonale, pour un outil de réglage manuel, le réglage pouvant également être effectué avec les doigts.

Un ressort de compression 100 est interposé entre une collerettte 72a prévue à la base de la tête 72 du bouton de réglage et la face externe du boîtier autour de l'ouverture traversée par le corps 71 du bouton de réglage.

Le corps 71 possède une partie intermédiaire de plus grand diamètre dans laquelle est formée une gorge pour un joint torique d'étanchéité 75 coopérant avec la surface interne du palier 11. Le corps 71 possède en outre, dans la réfion de son extrémité tournée vers la tige de sortie 60, une empreinte en creux 74 destinée à recevoir, comme on le verra plus loin, la tête mâle 65 de la tige de sortie.

Autour de cette empreinte 74, le corps du bouton 70 possède un filetage 76.

On observera ici que la collerette 72a et la partie située au niveau du joint 75 délimitent les mouvements de coulissement du bouton de réglage 70.

Un organe 110 de limitation de course angulaire comporte une partie centrale cylindrique 111 dans laquelle est formé un taraudage 112 coopérant avec le filetage 76 du bouton de réglage, et deux ailes longitudinales diamétralement opposées 113, 113, respectivement supérieure et inférieure, présentant un profil en forme générale de "U" ouvert vers l'axe central de l'organe 110.

Chacune de ces ailes 113 est en prise avec une nervure longitudinale 11a prévue respectivement au-dessus et au-dessous du palier 11 défini par le boîtier, de telle sorte que l'organe 110 peut coulisser avec le bouton de réglage 70 le long de son axe, mais est bloqué contre la rotation.

On observera ici que le mouvement de translation de l'organe 110 est limitée d'une part vers la droite par la venue en butée des extrémités libres des ailes 113 contre la face interne du boîtier 10, et d'autre part vers la gauche par la venue en butée de la face frontale (face de gauche) de l'organe 110 contre le flanc de la roue dentée 50 qui est tourné vers cette face.

Un correcteur tel que décrit ci-dessus est monté de façon fixe sur le boîtier d'un projecteur de véhicule, de telle manière que le bouton de réglage manuel 70 soit accessible de l'extérieur du boîtier.

On va maintenant indiquer comment fonctionne et comment s'utilise le dispositif correcteur donc la structure a été décrite ci-dessus.

La position de repos du dispositif est illustrée sur la figure 1. Dans cette position, le ressort 90 sollicite la tige de sortie 60 vers la droite, de sorte que le mécanisme à crabot 55 est en prise. Dans le même temps, le ressort 100 sollicite le bouton de réglage 70 vers la droite, de telle sorte que la tête 65 de la tige de sortie 60 n'est pas en prise avec l'empreinte femelle correspondante 74, et que ces deux organes sont désaccouplés.

Dans cette position de repos, la rotation du moteur électrique 20 provoque, via le pignon 21, la vis sans fin 40, la roue dentée 50 et le mécanisme à crabot 55, la rotation de la tige de sortie 60 à vitesse angulaire réduite, à la manière d'un correcteur à sortie rotative conventionnel.

La position de la figure 2 correspond au cas où un réglage manuel de la tige de sortie 60, pour l'amener dans une position de référence ou position "zéro" correspondant à une orientation prédéterminée du faisceau émis par le projecteur.

Ce réglage manuel est effectué en exerçant préalablement sur le bouton de réglage manuel 70 une pression selon son axe, vers la gauche sur la figure 2, sur une course délimitée par la compression maximale du ressort 100. Dans cette position comprimée, la tête 65 de la tige de sortie est engagée dans l'empreinte en creux 74, de telle sorte que le bouton 70 et la tige de sortie 60 deviennent solidaires en rotation.

Dans le même temps, et dès que la tête 65 est venue en butée au fond de l'empreinte 74, cette pression exercée sur le bouton 70 repousse également la tige de sortie 60 vers la gauche, sur une distance telle que les dents 53, 63 du mécanisme à crabot 55 soient dégagées les unes des autres. Il en résulte que la tige de sortie 60 n'est plus accouplée à la roue dentée 50.

Dans cette situation, une rotation exercée sur le bouton de réglage 70 a pour effet de faire tourner la tige de sortie 60, pour ainsi ajuster la position en translation de la tige de commande du projecteur sur la valeur de référence souhaitée.

On notera ici que l'organe 110 a pour objet de limiter la course de déplacement angulaire du bouton de réglage 70 et de la tige de commande 60 lors des opérations de réglage manuel, ceci afin de ne pas entraîner le réflecteur du projecteur associé vers des positions situées en dehors de sa gamme de positions admissibles.

Cette limitation de course se produit grâce au fait que la rotation du bouton de réglage 70 induit, outre la rotation de la tige 60, une translation axiale de l'organe 110 du fait de la coopération vis-écrou entre le bouton 70 et cet organe.

Lorsque le bouton 70 est entraîné dans le sens des aiguilles d'une montre (le dispositif étant observé depuis la droite sur la figure 2), ceci tend à déplacer l'organe 110 vers la droite, et ce mouvement peut se produire seulement jusqu'à ce que les extrémités libres des deux ailes 113 viennent en butée contre le boîtier 10, et dès que cette venue en butée est effective, la rotation du bouton dans le même sens ne peut plus être poursuivie, et une première limite de la course angulaire de la tige 60 est obtenue.

Dans le sens inverse, l'entraînement du bouton 70 dans le sens inverse de celui des aiguilles d'une montre provoque la translation de l'organe 110 vers la gauche sur la figure 2, et ce mouvement est limité par la venue en butée de la face de gauche de l'organe 110 contre la face de droite de la roue dentée 50; une fois que cette mise en butée est effective, le bouton 70, par réaction, va tendre à se déplacer vers la droite si la rotation est poursuivie, et ceci jusqu'à ce que la tête 65 de la tige de sortie 60 ne soit plus en prise avec l'empreinte correspondante 74. Il en résulte alors que le bouton 70 n'est plus capable d'entraîner en rotation la tige de sortie 60, et une seconde limite de la course angulaire cette tige est ainsi obtenue.

## Revendications

1. Dispositif correcteur pour régler l'orientation d'un faisceau émis par un projecteur de véhicule automobile, comprenant un boîtier (10) abritant un moteur électrique (20), une tige de sortie rotative (60) et un réducteur (21, 40, 50) opérant entre l'arbre de sortie du moteur électrique et ladite tige de sortie, **caractérisé en ce qu'**il comprend en outre un organe de réglage manuel (70) monté rotatif dans le boîtier (10), un moyen de transmission sélective (65, 74) entre l'organe de réglage manuel et la tige de sortie pour amener cette dernière dans une position de référence lors de la rotation dudit organe de réglage, et un mécanisme d'embrayage sélectif (55, 53, 63) prévu au niveau de la tige de sortie, le débrayage du mécanisme d'embrayage étant assuré par un mouvement de débrayage exercé par ledit organe de réglage (70), ce mouvement de débrayage étant différent de son mouvement rotatif de réglage,
**en ce que** le réducteur comprend une roue dentée menée (50) disposée de façon coaxiale avec la tige de sortie (60), et **en ce que** le mécanisme d'embrayage est constitué par un mécanisme à crabot (55, 53, 63) prévu entre ladite roue dentée et ladite tige.

2. Dispositif selon la revendication 1, **caractérisé en ce que** le mécanisme à crabot comporte une première série de dents (53) prévues à l'extrémité libre d'un manchon (51) solidaire de la roue dentée (50) et entourant la tige de sortie (60), et une seconde série de dents (63) prévues sur une collerette (64) solidaire de la tige de sortie.

3. Dispositif selon l'une des revendications 1 et 2, **caractérisé en ce que** l'organe de réglage manuel (70) est disposé de façon coaxiale avec la tige de sortie (60), et **en ce que** ledit mouvement de débrayage consiste en une translation axiale de l'organe de réglage manuel (70), apte à exercer sur la tige de sortie une sollicitation axiale.

4. Dispositif selon la revendication 3, **caractérisé en ce que** le moyen de transmission sélective entre l'organe de réglage manuel (70) et la tige de sortie (60) consiste en une coopération mâle-femelle (65, 74) prévue au voisinage d'une zone d'appui dudit organe de réglage manuel sur ladite tige de sortie, ladite transmission étant en prise lorsqu'un appui est réalisé.

5. Dispositif selon l'une des revendications 1 à 4, **caractérisé en ce qu'**il comprend un premier moyen élastique (90) apte à solliciter la tige de sortie (60) dans une direction correspondant à un état en prise du mécanisme à crabot (55).

6. Dispositif selon l'une des revendications 1 à 5, **caractérisé en ce qu'**il comprend un second moyen élastique (100) apte à solliciter l'organe de réglage manuel (70) vers une position correspondant à un état de désaccouplement de ladite transmission sélective (65, 74).

7. Dispositif selon l'une des revendications 1 à 6, **caractérisé en ce qu'**il comprend des moyens (110) pour limiter la course de déplacement en rotation de la tige de sortie (60) sous l'action de l'organe de réglage manuel (70).

8. Dispositif selon la revendication 7 prise en combinaison avec l'une des revendications 3 et 4, **caractérisé en ce que** le moyen de limitation de course comprend un curseur (110) bloqué contre la rotation et en prise avec l'organe de réglage manuel (70) par une coopération vis-écrou (76, 111), ledit curseur comportant deux surfaces opposées aptes à venir en butée contre deux surfaces du dispositif.

9. Dispositif selon la revendication 8, **caractérisé en ce que** lesdites surfaces du dispositif comprennent une zone du boîtier (10) entourant l'organe de réglage manuel (70) et un flanc, situé en vis-à-vis, de la roue dentée (50).

## Claims

1. Correction device for adjusting the orientation of a beam emitted by a motor vehicle headlight, comprising a casing (10) housing an electric motor (20), a rotary output rod (60) and a reduction gear (21, 40, 50) operating between the output shaft of the electric motor and the said output rod, **characterised in that** it also comprises a manual adjustment member (70) mounted so as to rotate in the casing (10), a means of selective transmission (65, 74) between the manual adjustment member and the output rod in order to bring the latter into a reference position when said adjustment member rotates, and a selective engagement mechanism (55, 53, 63) provided at the output rod, the disengagement of the engagement mechanism being provided by a disengagement movement exerted by the said adjustment member (70), this disengagement movement being different from its rotary adjustment movement, **in that** the reduction gear comprises a driven toothed wheel (50) disposed coaxially with the output rod (60), and **in that** the engagement mechanism consists of a positive-clutch mechanism (55, 53, 63) provided between the said toothed wheel and the said rod.

2. Device according to Claim 1, **characterised in that** the positive-clutch mechanism comprises a first series of teeth (53) provided at the free end of a sleeve (51) fixed to the toothed wheel (50) and surrounding the output rod (60), and a second series of teeth (63) provided on a collar (64) fixed to the output rod.

3. Device according to one of Claims 1 and 2, **characterised in that** the manual adjustment member (70) is disposed coaxially with the output rod (60), and **in that** the said disengagement movement consists of an axial translation of the manual adjustment member (70), able to exert an axial force on the output rod.

4. Device according to Claim 3, **characterised in that** the means of selective transmission between the manual adjustment member (70) and the output rod (60) consists of a male-female cooperation (65, 74) provided in the vicinity of an area of abutment of the said manual adjustment member on the said output rod, the said transmission being in engagement when an abutment is effected.

5. Device according to one of Claims 1 to 4, **characterised in that** it comprises a first elastic means (90) able to force the output rod (60) in a direction corresponding to an engaged state of the positive-clutch mechanism (55).

6. Device according to one of Claims 1 to 5, **characterised in that** it comprises a second elastic means (100) able to force the manual adjustment member (70) towards a position corresponding to a state of decoupling of the said selective transmission (65, 74).

7. Device according to one of Claims 1 to 6, **characterised in that** it comprises means (110) for limiting the rotational movement travel of the output rod (60) under the action of the manual adjustment member (70).

8. Device according to Claim 7 taken in combination with one of Claims 3 and 4, **characterised in that** the travel limitation means comprises a traveller (110) locked against rotation and in engagement with the manual adjustment member (70) by means of a nut and screw cooperation (76, 111), the said traveller comprising two opposite surfaces able to come into abutment against two surfaces of the device.

9. Device according to Claim 8, **characterised in that** the said surfaces of the device comprise an area of the casing (10) surrounding the manual adjustment member (70) and a flank, situated opposite, of the toothed wheel (50).

## Patentansprüche

1. Stellvorrichtung zum Einstellen der Lichtbündel eines Kraftfahrzeugscheinwerfers, mit einem Gehäuse (10), in dem sich ein Elektromotor (20) befindet, einer drehbaren Abtriebstange (60) und einem Untersetzungsgetriebe (21, 40, 50), das zwischen der Abtriebswelle des Elektromotors und der Abtriebsstange wirkt,
**dadurch gekennzeichnet, dass** sie ferner ein handbetätigtes Stellorgan (70) umfasst, das drehbar in dem Gehäuse (10) angebracht ist, sowie ein Mittel zur selektiven Bewegungsübertragung (65, 74) zwischen dem handbetätigten Stellorgan und der Abtriebsstange, um diese bei der Drehung des Stellorgans in eine Bezugsposition zu bringen, und einen Mechanismus zum selektiven Aneinanderkoppeln (55, 53, 63), der auf Höhe der Abtriebsstange vorgesehen ist, wobei das Abkoppeln des Kopplungsmechanismus durch eine Abkoppelbewegung erfolgt, die durch das Stellorgan (70) ausgeführt wird, wobei sich die Abkoppelbewegung von seiner Einstelldrehbewegung unterscheidet, und dass das Untersetzungsgetriebe ein getriebenes Zahnrad (50) umfasst, das koaxial zur Abtriebsstange (60) angeordnet ist, und dass der Kopplungsmechanismus von einem Klauenmechanismus (55, 53, 63) gebildet ist, der zwischen dem Zahnrad und der Stange vorgesehen ist.

2. Vorrichtung nach Anspruch 1,
**dadurch gekennzeichnet, dass** der Klauenmechanismus eine erste Reihe Zähne (53) umfasst, die am freien Ende einer Muffe (51) vorgesehen sind, welche fest mit dem Zahnrad (50) verbunden ist und die Abtriebsstange (60) umgibt, sowie eine zweite Reihe Zähne (63), die auf einem Kragen (64) vorgesehen sind, der fest mit der Abtriebsstange verbunden ist.

3. Vorrichtung nach einem der Ansprüche 1 oder 2,
**dadurch gekennzeichnet, dass** das handbetätigte Stellorgan (70) koaxial zur Abtriebsstange (60) angeordnet ist, und dass die Abkoppelbewegung in einer axialen Translationsbewegung des handbetätigten Stellorgans (70) besteht, durch die auf die Abtriebsstange ein axialer Druck ausgeübt zu werden vermag.

4. Vorrichtung nach Anspruch 3,
**dadurch gekennzeichnet, dass** das Mittel zur selektiven Bewegungsübertragung zwischen dem handbetätigten Stellorgan (70) und der Abtriebsstange (60) in einem Zusammenwirken zwischen Steckteil und Buchse (65, 74) besteht, welches in der Nähe eines Bereichs vorgesehen ist, in dem das handbetätigte Stellorgan an der Abtriebsstange anliegt, wobei das Übertragungsmittel in Eingriff ist, wenn es zur Anlage kommt.

5. Vorrichtung nach einem der Ansprüche 1 bis 4,
**dadurch gekennzeichnet, dass** sie ein erstes elastisches Mittel (90) umfasst, das die Abtriebsstange (60) in eine Richtung zu drücken vermag, die einem Zustand entspricht, in dem sich der Klauenmechanismus in Eingriff befindet.

6. Vorrichtung nach einem der Ansprüche 1 bis 5,
**dadurch gekennzeichnet, dass** sie ein zweites elastisches Mittel (100) umfasst, das das handbetätigte Stellorgan (70) in eine Position zu drücken vermag, die einem Zustand entspricht, in dem das Mittel zur selektiven Übertragung (65, 74) abgekoppelt ist.

7. Vorrichtung nach einem der Ansprüche 1 bis 6,
**dadurch gekennzeichnet, dass** sie Mittel (110) zum Begrenzen des Weges umfasst, auf dem sich die Abtriebsstange (60) unter der Einwirkung des handbetätigten Stellorgans (70) drehend verlagert.

8. Vorrichtung nach Anspruch 7 in Verbindung mit einem der Ansprüche 3 oder 4,
**dadurch gekennzeichnet, dass** das Mittel zur Wegbegrenzung des Verlagerungsweges einen Schieber (110) umfasst, der gegen die Drehung blockiert und mit dem handbetätigten Stellorgan (70) durch ein Schraube/Mutter-Zusammenwirken (76, 111) in Eingriff ist, wobei der Schieber zwei gegenüberliegend angeordnete Seiten aufweist, die gegen zwei Seiten der Vorrichtung zum Anschlag zu kommen vermögen.

9. Vorrichtung nach Anspruch 8,
**dadurch gekennzeichnet, dass** die Seiten der Vorrichtung einen das handbetätigte Stellorgan (70) umgebenden Bereich des Gehäuses (10) und eine gegenüberliegende Flanke des Zahnrades (50) umfassen.
